Europäisches Patentamt

**European Patent Office**

**Office européen des brevets**

(11) Numéro de publication: **0 063 844**
**B1**

(12) **FASCICULE DE BREVET EUROPÉEN**

(45) Date de publication du fascicule du brevet:
04.02.87

(21) Numéro de dépôt: **82200457.8**

(22) Date de dépôt: **15.04.82**

(51) Int. Cl.⁴: **C 01 B 15/043,** C 05 D 9/00,
C 01 B 15/04

(54) **Utilisation pour l'amendement des sols de particules solides contenant un peroxyde métallique.**

(30) Priorité: **27.04.81 FR 8108512**

(43) Date de publication de la demande:
**03.11.82 Bulletin 82/44**

(45) Mention de la délivrance du brevet:
**04.02.87 Bulletin 87/6**

(84) Etats contractants désignés:
**AT BE CH DE FR GB IT LI NL SE**

(56) Documents cité:
**EP-B-0 002 543**
**FR-A-2 376 695**
**FR-A-2 383 880**

(73) Titulaire: **INTEROX Société anonyme dite:, Rue du Prince Albert, 33, B-1050 Bruxelles (BE)**

(72) Inventeur: **Gago, Ignace, Chaussée de Nivelles, 53, B-1420 Braine- l'Alleud (BE)**

(74) Mandataire: **Lederer, Franz, Dr., Vanderwerth, Lederer & Riederer Patentanwälte Lucile- Grahn- Strasse 22, D-8000 München 80 (DE)**

## Description

L'invention concerne l'utilisation de particules solides contenant des peroxydes métalliques et plus particulièrement des peroxydes de métaux alcalino-terreux, pour l'amendement des sols, notamment en agriculture, en horticulture et en sylviculture.

Les peroxydes métalliques tels que les peroxydes de métaux alcalino-terreux constituent des sources d'oxygène fort intéressantes pour diverses utilisations. Ainsi, il est connu d'amender les sols en leur incorporant des particules solides de peroxyde de calcium dans le but d'obtenir un dégagement lent d'oxygène. L'oxygène est absorbé par les racines des plantes et favorise leur croissance (demande de brevet japonais 51/141 265 déposée le 20 mai 1975 au nom de Nippon Peroxide K.K.)

Cet apport lent et continu d'oxygène est particulièrement souhaitable pour des cultures effectuées dans des conditions anaérobies. Il en est ainsi lorsque les sols sont insuffisamment aérés parce qu'ils sont imprégnés ou gorgés d'eau, voire même complètement innondés ou encore parce que la couche externe a une porosité réduite par exemple du fait du tassement des terres. Tel est également le cas des sols qui contiennent une proportion importante de constituants à demande biochimique en oxygène (DBO) élevée. Ces constituants peuvent résulter de la décomposition de matières organiques faisant suite par exemple, à l'emploi d'herbicides, ou encore de la décomposition de déchets de récoltes antérieures sur des terres non labourées.

Lorsqu'ils se trouvent sous la forme de particules solides anhydres, les peroxydes de métaux alcalino-terreux, et plus particulièrement le peroxyde de calcium, ne se décomposent que fort peu. Par contre, en présence d'humidité, le peroxyde de calcium se décompose rapidement en libérant son oxygène actif. Cette décomposition est accélérée lorsque le milieu est acide, comme cela peut arriver naturellement dans les sols ou comme cela peut résulter de la présence de certains additifs habituellement utilisés en agriculture, horticulture ou sylviculture, tels que certains engrais. Dans ces conditions, les peroxydes sous forme de particules ne présentent pas une décomposition suffisamment lente pour assurer un apport continu d'oxygène, de la période de germination des semences à la période de croissance de la plante, ni suffisamment complète pour permettre l'utilisation de tout l'oxygène disponible en principe.

Pour réduire la vitesse de décomposition du peroxyde de calcium lors de son utilisation pour le traitement des eaux, on a proposé de l'enrober au moyen d'agents d'enrobages insolubles dans l'eau (demande de brevet européen EP-A-000 25 43 déposée le 15 novembre 1978 au nom d'Interox). Toutefois, certains de ces agents d'enrobage insolubles forment une couche protectrice tellement efficace qu'il est difficile de récupérer tout l'oxygène disponible en principe.

La présente invention vise à résoudre le problème de fournir pour l'amendement des sols des particules solides contenant un peroxyde métallique tel que le peroxyde de calcium qui conviennent bien comme source d'oxygène à dégagement lent et continu notamment dans des milieux tels que des sols humides et éventuellement acides. Les particules destinées à l'utilisation selon l'invention se décomposent lentement, en dégageant de façon régulière leur oxygène actif, jusqu'à émission quasi complète de l'oxygène disponible en principe. De surcroit, elles ne contiennent pas de produits non biodégradables. En outre, elles présentent une vitesse de dissolution dans l'eau et une stabilité physique telles que lorsqu'elles sont en présence d'eau ou d'humidité, l'accessibilité de l'eau au composé peroxydé lui-même est contrôlée, sans être supprimée ou trop fortement inhibée.

De ce fait, lorsque les particules sont utilisées pour amender les sols de culture, elles dégagent de l'oxygène en quantité suffisante et pendant une période suffisante pour couvrir les besoins en oxygène depuis la période de germination des semences jusqu'à la période de développement des racines, sans que ce dégagement d'oxygène ne se prolonge de façon sensible au délà de la période pendant laquelle il est utile.

La présente invention concerne l'utilisation de particules solides contenant un peroxyde métallique enrobées au moyen d'un agent d'enrobage contenant à raison de 30% à 100% de son poids, un phosphate condensé soluble dans l'eau.

Dans les particules destinées à l'utilisation selon l'invention, l'agent d'enrobage peut constituer une couche, de préférence continue, disposée autour du coeur de la particule qui est constitué essentiellement de peroxyde métallique. Il peut aussi servir de liant d'agglomération de particules fines élémentaires. Dans ce cas, chacune des particules fines élémentaires de peroxyde métallique est entourée d'une couche, continue ou non, d'agent d'enrobage.

Par phosphates condensés, on entend désigner tous les phosphates présentant au moins une séquence de liaisons phosphore-oxygène-phosphore dans leur molécule. A titre d'exemples de pareils phosphates, on peut citer les pyrophosphates, les polyphosphates tels que les tripolyphosphates, les tétrapolyphosphates et les pentapolyphosphates et les métaphosphates tels que le trimétaphosphate, le tétramétaphosphate et l'hexamétaphosphate.

Par phosphates condensés solubles dans l'eau, on entend désigner les phosphates condensés dont la solubilité dans l'eau est supérieure à 1% en poids dans des conditions normales de température et de pression.

Les pyrophosphates répondent à la formule générale :

$(Me)_n(H)_m P_2 O_7$

où n est un nombre entier allant de 1 à 4 et m vaut 4-n et où Me représente un atome de métal de valence 1 ou un groupe $-NH_4$.

Les polyphosphates répondent à la formule générale

$Me_2 O (PO_3 Me)_p$

2

où p vaut au moins 3 et où Me a la même signification que ci-dessus.

Les métaphosphates répondent à la formule générale

$(MePO_3)_q$

où q vaut au moins 3 et où Me a la même signification que ci-dessus.

Les phosphates condensés présents dans l'agent d'enrobage sont en général des phosphates de métaux alcalins ou d'ammonium et de préférence des phosphates de sodium. L'agent d'enrobage peut également contenir des mélanges de phosphates.

Parmi tous les phosphates utilisables, les polyphosphates et les métaphosphates sont préférés.

De bons résultats ont été obtenus avec le tripolyphosphate de sodium et plus particulièrement l'hexamétaphosphate de sodium.

L'agent d'enrobage est en général présent à raison d'au moins 0,1% et de préférence d'au moins 0,5% du poids des particules. La quantité d'agent d'enrobage ne dépasse en général pas 40% et de préférence 20% du poids des particules.

L'agent d'enrobage est constitué de 30 à 100% en poids des phosphates condensés solubles, le solde éventuel (de 0 à 70%) pouvant être constitué d'additifs divers dépendant entre autres de l'usage auquel sont destinées les particules. Ainsi, l'agent d'enrobage peut contenir des additifs permettant de réduire l'attrition ou des régulateurs de pH. Comme régulateurs de pH, conviennent des tampons tels que des carbonates, des bicarbonates, du tétraborate de sodium seul ou en mélange avec des composés tels que l'hydroxyde de sodium, des mélanges de phosphates acides de sodium ou de potassium,etc. Les agents régulateurs de pH sont en général présents à raison de 70% au plus et de préférence de 10 à 60% du poids total d'agent d'enrobage. Les autres additifs de l'agent d'enrobage sont présents en général à raison de 10% au plus de son poids.

De préférence l'agent d'enrobage contient de 40 à 90% de son poids de phosphates condensés solubles, de 10 à 60% de régulateurs de pH et jusqu'à 10% d'autres additifs.

Les peroxydes métalliques contenus dans les particules destinées à l'utilisation selon l'invention peuvent être de natures diverses. En général, il s'agit de peroxydes de métaux des groupes 1 et 2 du Tableau périodique des éléments. Ce peuvent être aussi des mélanges de peroxydes. De préférence, ce sont des peroxydes des métaux du groupe 2 tels que les peroxydes de calcium, de magnésium et de zinc. De bons résultats ont été obtenus dans le cas du peroxyde de calcium.

Les particules utilisées selon l'invention peuvent contenir, en mélange avec le peroxyde métallique, des additifs divers en petites quantités, ne dépassant en général pas 20% du poids total des particules. Parmi ces additifs figurent notamment des stabilisants des peroxydes.

Les particules peuvent également contenir des quantités variables ne dépassant en général pas 40% du poids total des particules, de produits résultant de la fabrication du peroxyde métallique tels que des réactifs non-transformés ou des sous-produits de réaction (oxydes, hydroxydes, carbonates métalliques, etc). Les particules pour l'utilisation selon l'invention peuvent enfin contenir également des charges telles que le talc en quantités variables, ne dépassant en général pas 40% de leur poids total. Ces charges permettent d'ajuster la teneur en oxygène actif à la valeur souhaitée.

Des particules destinées à l'utilisation selon l'invention contiennent ainsi, en proportions pondérales:
- de 10 à 95% de peroxydes métalliques;
- de 0,1 à 20% d'un agent d'enrobage contenant de 30 à 100% de son poids de phosphates condensés solubles, jusqu'à 70% de régulateurs de pH et jusqu'à 10% d'autres additifs;
- jusqu'à 20% d'additifs tels que des stabilisants;
- jusqu'à 40% de produits résultant de la fabrication des peroxydes métalliques; et
- jusqu'à 40% de charges.

Les particules peuvent contenir des quantités variables d'oxygène actif. En général elles contiennent au moins 1% de leur poids d'oxygène actif. Le plus souvent cette proportion ne dépasse pas 40%. Dans le cas du peroxyde de calcium, les particules contiennent en général de 8 à 20% en poids d'oxygène actif.

Les particules pour l'utilisation selon l'invention peuvent avoir des dimensions très variables. Leur diamètre est en général supérieur à 0,01 mm. Le plus souvent, il est de 0,01 à 50 mm et de préférence de 0,1 à 25 mm.

Comme il a été dit précédemment, les particules peuvent se présenter sous forme de granules dont la couche extérieure contient l'agent d'enrobage, ou sous forme d'agglomérats de particules fines élémentaires liées entre elles par l'agent d'enrobage. Ces agglomérats peuvent avoir des formes quelconques telles que celles de pastilles, de tablettes et de comprimés.

Lorsque les particules se présentent sous forme d'agglomérats, elles peuvent être fabriquées par mélange à sec de particules fines de peroxyde métallique et d'agent d'enrobage dans les proportions désirées. Le mélange à sec peut être réalisé dans n'importe quel mélangeur connu et est suivi par un compactage destiné à agglomérer les particules fines entre elles pour former les particules selon l'invention. A cet effet, on peut utiliser n'importe quel compacteur connu capable d'exercer une pression suffisante. De préférence, la pression exercée au cours du compactage est supérieure à 50 kg/cm$^2$ . Des appareils convenant bien sont les pastilleuses et les compacteurs à cylindres. Après le compactage, on peut encore procéder à un broyage pour amener les particules aux dimensions désirées pour leur mise en oeuvre.

Une autre technique consiste à agglomérer les particules fines de peroxyde métallique au moyen d'une solution ou d'une suspension de l'agent d'enrobage dans un solvant adéquat. Ce traitement peut être réalisé dans divers types d'appareils connus en eux-mêmes tels que des sécheurs en lit fluide ou des sécheurs à tambour.

Les particules fines utilisées dans les procédés d'agglomération ont en général un diamètre moyen de 0,1 à 300 micromètres et le plus souvent de 1 à 100 micromètres.

Selon un mode de réalisation préféré de l'invention, les particules se présentent sous forme de granules dont la couche extérieure contient l'agent d'enrobage.

Le procédé pour la fabrication des particules consiste à pulvériser sur des particules de peroxyde métallique en mouvement une solution de l'agent d'enrobage dans un milieu liquide et d'évaporer le solvant de la solution.

L'agent d'enrobage est en général mis en oeuvre sous la forme d'une solution aqueuse.

La concentration de l'agent d'enrobage dans la solution peut varier dans d'assez larges limites et est en général de 1 à 70% en poids du poids total de solution. On utilise de préférence une concentration aussi proche que possible de la concentration à laquelle on observe une séparation d'une phase solide dans les conditions de température utilisées.

La solution est mise en oeuvre en général à une température allant de la température ambiante à une température légèrement supérieure à celle des granules sur lesquels elle est pulvérisée. En général, la température de la solution va de la température ambiante à la température des granules sur lesquels elle est pulvérisée plus 25°C.

Les températures auxquelles on opère la pulvérisation et l'évaporation sont inférieures à la température de décomposition de l'agent d'enrobage et en général ne dépassent pas 120°C. Pour l'évaporation on utilise en général des températures de 25 à 110°C.

La pulvérisation peut être réalisée selon différentes techniques par exemple en lit fluidisé, sur sole tournante, dans un tambour rotatif ou dans tout autre dispositif analogue connu en lui-même.

L'évaporation peut se faire en même temps et dans la même enceinte que la pulvérisation ou dans un appareil distinct. On opère en général selon un procédé en continu. Un dispositif tel qu'un lit fluide ou tout autre dispositif connu en lui-même peut convenir. Dans ce cas, la température du lit fluide est de 30 à 105°C en général.

L'utilisation d'un lit fluide s'est révélée particulièrement avantageuse, d'une part parce que la pulvérisation et l'évaporation peuvent être réalisées simultanément dans le même appareil et d'autre part parce que cette technique permet l'obtention d'un enrobage plus compact et plus homogène.

Comme gaz de fluidisation on peut utiliser n'importe quel gaz inerte et en particulier l'air. Ce gaz peut être chauffé pour maintenir la température du lit fluide à la valeur désirée. On peut aussi utiliser d'autres moyens de chauffage tels qu'un faisceau tubulaire placé dans le lit fluide.

On peut également opérer selon un procédé semblable mais en discontinu.

Les particules peuvent être utilisées avantageusement pour l'amendement des sols fortement humides. Elles peuvent également être utilisées lorsque les semences enrobées contenant une source d'oxygène dans leur enrobage ne conviennent pas, soit pour des raisons physiques comme c'est le cas lors de la plantation de plants d'arbres, ceps de vigne, etc, soit pour des raisons chimiques comme c'est le cas lorsque les semences sont particulièrement sensibles aux sels minéraux.

Dans l'utilisation pour l'amendement des sols selon l'invention, on incorpore les particules en général en les enterrant à une profondeur de 1 à 5 cm. Les particules sont en général mises en oeuvre à raison de 1 à 1000 g/m$^2$ de surface traitée.

Les exemples ci-après servent à mieux faire comprendre l'invention et à montrer les résultats remarquables obtenus lors de l'utilisation des agents d'enrobage selon l'invention, sans toutefois limiter la portée de l'invention aux formes d'exécution décrites.

L'exemple 1 donne un mode de préparation des particules contenant du peroxyde de calcium enrobé.

Les exemples 2 à 9 mettent en évidence la réduction de la vitesse de décomposition du peroxyde de calcium contenu dans les particules utilisées selon l'invention.

Les exemples 5 à 7 et 9 sont donnés à titre comparatif.

**Exemple 1**

**Fabrication de particules de peroxyde de calcium agglomérées au moyen d'hexamétaphosphate de sodium (HMP)**

On met en oeuvre une poudre de peroxyde de calcium (à 80% de CaO$_2$) obtenu par réaction de peroxyde d'hydrogène avec de la chaux. Le diamètre moyen des particules est de 8 microns.

La poudre est agglomérée par un procédé continu en lit fluidisé.

L'appareil utilisé consiste en un cylindre de 15 cm de diamètre et de 77 cm de hauteur, muni à sa base d'une plaque de répartition du gaz (trous de 2 mm).

Initialement, on introduit 3,5 kg de particules de peroxyde de calcium de diamètre inférieur à 2 mm.

On fait passer de l'air par la plaque de répartition des gaz et on introduit, par un pulvérisateur pneumatique (gicleur) placé à la paroi à 11 cm du fond une solution aqueuse contenant 3 % en poids d'hexamétaphosphate de sodium, 2,5% en poids de carbonate de sodium (tampon), et 0,32% en poids de peroxyde d'hydrogène à 100% à raison de 2,7 kg par heure. La température de la solution est de 20 à 25°C.

4

Simultanément, on introduit la poudre de peroxyde de calcium, via un couloir vibrant, dans le lit fluidisé, à l'intervention d'un venturi alimenté en air comprimé, à raison de 2,7 kg par heure.

La hauteur du lit est de 25 cm et sa température de 32°C.

On soutire de l'appareil, par débordement, des particules agglomérées de dimensions comprises entre 0,5 et 4 mm et contenant environ 65% en poids de peroxyde de calcium.

### Exemples 2 à 7

**Vitesse de décomposition dans le sol du peroxyde de calcium des particules**

Deux séries d'essais ont été réalisées avec respectivement des particules contenant du peroxyde de calcium obtenues selon le procédé de l'exemple 1 (exemples 2 à 4) et des particules de peroxyde de calcium non enrobées (exemples 5 à 7 de comparaison).

On mélange 10 parties en poids de particules de peroxyde de calcium avec 90 parties en poids de terreau humide (à 15,6% d'eau) pour mise en pot JOHN INNES n°1.

Les mélanges sont placés dans des bouteilles en verre scellées et conservés pendant une nuit.

La perte en oxygène des particules de peroxyde de calcium est mesurée et est donnée au Tableau 1 ci-après.

## TABLEAU 1

| Essai n° | Particules | | | Vitesse de décomposition | |
| --- | --- | --- | --- | --- | --- |
| | $CaO_2$ | $Na_2CO_3$ | HMP | perte en oxygène par seconde et | |
| | | | | par g de mélange | par g de $CaO_2$ à 100 % (moyenne) |
| | % poids | % poids | % poids | $l.sec^{-1}.g^{-1}$ | |
| 2 | 65 | 1,9 | 2,9 | $2,37\ 10^{-9}$ | |
| 3 | 65 | 1,9 | 2,9 | $1,82\ 10^{-9}$ | $1,2\ 10^{-10}$ |
| 4 | 65 | 1,9 | 2,9 | $1,51\ 10^{-9}$ | |
| 5 | 80 | – | – | $4,92\ 10^{-9}$ | |
| 6 | 80 | – | – | $4,65\ 10^{-9}$ | $3,8\ 10^{-10}$ |
| 7 | 80 | – | – | $4,84\ 10^{-9}$ | |

### Exemples 8 et 9

**Vitesse d'hydrolyse du peroxyde de calcium des particules en milieu aqueux**

On a placé dans deux récipients conservés dans des conditions statiques à température ambiante et contenant de l'eau déminéralisée, des doses correspondant à 500 mg/l de particules de peroxyde de calcium obtenues selon l'exemple 1 (exemple 8) et de particules de peroxyde de calcium non enrobées (exemple 9).

Après 25 jours, la perte en oxygène actif des particules a été mesurée. La perte en oxygène actif, par jour, est donnée au Tableau 2 ci-après.

TABLEAU 2

| Essai n° | Particules | Vitesse de décomposition % par jour |
|----------|------------|-------------------------------------|
| 8 | Particules de l'exemple 1 | 2,1 |
| 9 | Particules de $CaO_2$ à 80% en poids | 2,7 |

**Revendications**

1. Utilisation pour l'amendement des sols, de particules solides contenant un peroxyde métallique, enrobées avec un agent d'enrobage qui contient, à raison de 30 à 100 % de son poids, un phosphate condensé soluble dans l'eau.

2. Utilisation selon la revendication 1, caractérisée en ce que l'agent d'enrobage contient en outre un régulateur de pH.

3. Utilisation selon la revendication 1 ou 2, caractérisée en ce que l'agent d'enrobage contient de 40 à 90 % de son poids de phosphates condensés solubles, de 10 à 60 % de régulateurs de pH et jusqu'à 10 % d''autres additifs.

4. Utilisation selon l'une quelconque des revendications 1 à 3, caractérisée en ce que l'agent d'enrobage contient un polyphosphate ou un métaphosphate de métal alcalin ou d'ammonium.

5. Utilisation selon la revendication 4, caractérisée en ce que l'agent d'enrobage contient du tripolyphosphate de sodium.

6. Utilisation selon la revendication 4, caractérisée en ce que l'agent d'enrobage contient de l'hexamétaphosphate de sodium.

7. Utilisation selon l'une quelconque des revendications 1 à 6, caractérisée en ce que le peroxyde métallique est un peroxyde d'un métal du groupe 2 du Tableau périodique des éléments.

8. Utilisation selon la revendication 7, caractérisée en ce que le peroxyde métallique est le peroxyde de calcium.

**Patentansprüche**

1. Verwendung von ein Metallperoxid enthaltenden festen Teilchen, welche mit einem Umhüllungsmittel umhüllt sind, das 30 - 100 Gew.-% wasserlösliches kondensiertes Phosphat enthält, zur Bodenverbesserung.

2. Verwendung nach Anspruch 1, dadurch gekennzeichnet, daß das Umhüllungsmittel außerdem ein pH-Regulierungsmittel enthält.

3. Verwendung nach Anspruch 1 oder 2, dadurch gekennzeichnet, daß das Umhüllungsmittel 40 - 90 Gew.-% lösliche kondensierte Phosphate, 10 - 60 % pH-Regulierungsmittel und bis zu 10 % andere Zusätze enthält.

4. Verwendung nach einem der Ansprüche 1 bis 3, dadurch gekennzeichnet, daß das Umhüllungsmittel ein Phosphat oder ein Metaphosphat eines Alkalimetalls oder von Ammonium enthält.

5. Verwendung nach Anspruch 4, dadurch gekennzeichnet, daß das Umhüllungsmittel Natriumtripolyphosphat enthält.

6. Verwendung nach Anspruch 4, dadurch gekennzeichnet, daß das Umhüllungsmittel Natriumhexametaphosphat enthält.

7. Verwendung nach einem der Ansprüche 1 bis 6, dadurch gekennzeichnet, daß das Metallperoxid ein Peroxid eines Metalls der Gruppe 2 des Periodensystems enthält.

8. Verwendung nach Anspruch 7, dadurch gekennzeichnet, daß das Metallperoxid Calciumperoxid ist.

**Claims**

1. Use in soil improvement of solid particles containing a metal peroxide coated with a coating agent which contains 30 - 100 % bv weight of a condensed, water-soluble phosphate.

2. Use according to claim 1, characterized in that the coating agent contains additionally an agent for the regulation of the pH.

3. Use according to claim 1 or 2, characterized in that the coating agent contains 40 - 90 % by weight soluble condensed phosphates, 10 - 60 % pH-regulating agent and up to 10 % of other additives.

4. Use according to one of claims 1 - 3, characterized in that the coating agent contains a polyphosphate or a metaphosphate of an alkali metal or of ammonium.

5. Use according to claim 4, characterized in that the coating agent contains sodiumtripolyphosphate.

6. Use according to claim 4, characterized in that the coating agent contains sodiumhexametaphosphate.

7. Use according to one of claims 1 - 6, characterized in that the metal peroxide is a peroxide of a metal of group 2 of the Periodic System.

8. Use according to claim 7, characterized in that the metal peroxide is calciumperoxide.